# EUROPEAN PATENT APPLICATION

(11) **EP 4 084 110 A1**
(43) Date of publication of application: **02.11.2022**
(21) Application number: 20905274.5
(22) Date of filing: 21.07.2020
(51) Int. Cl.: H01M 4/04, H01G 11/06, H01G 11/86, H01G 13/00

(54) **METHOD FOR MANUFACTURING ELECTRODE, METHOD FOR MANUFACTURING POWER STORAGE DEVICE, AND ELECTRODE MANUFACTURING DEVICE**

(30) Priority: 26.12.2019 JP 2019237214
(71) Applicant: Musashi Energy Solutions Co., Ltd., Hokuto-shi, Yamanashi 409-1501 (JP)
(72) Inventor: CHIBA, Takashi, Hokuto-shi, Yamanashi 409-1501 (JP); AONO, Shintaro, Hokuto-shi, Yamanashi 409-1501 (JP)
(74) Representative: TBK
(86) International application number: PCT/JP2020/028310
(87) International publication number: WO 2021/131124

(57) **Abstract**

A doped electrode is manufactured by doping an active material included in an electrode with an alkali metal in a dope solution containing a first aprotic solvent and an alkali metal salt. The doped electrode is cleaned with a cleaning solution containing a second aprotic solvent that has a boiling point lower than that of the first aprotic solvent. The cleaning solution is controlled such that a content ratio of the first aprotic solvent in the cleaning solution is 8 vol% or lower.

## Description

### CROSS-REFERENCE TO RELATED APPLICATION

This international application claims the benefit of Japanese Patent Application No. 2019-237214, filed on December 26, 2019 in the Japan Patent Office, and the entire disclosure of Japanese Patent Application No. 2019-074791 is incorporated herein by reference.

### TECHNICAL FIELD

The present disclosure relates to a method of manufacturing an electrode, a method of manufacturing a power storage device, and an electrode manufacturing apparatus.

### BACKGROUND ART

In recent years, downsizing and weight reduction of electronic devices have been remarkable, which further increases a demand for downsizing and weight reduction also of batteries used as drive power supplies for the electronic devices.

To satisfy such a demand for downsizing and weight reduction, nonaqueous electrolyte rechargeable batteries, typified by a lithium-ion rechargeable battery, have been developed. As a power storage device applicable to a use that requires high energy density characteristics and high output characteristics, a lithium ion capacitor is known. In addition, a sodium ion battery and a sodium ion capacitor, using sodium that is lower in cost and is a richer resource than lithium, are also known.

A process of doping an electrode with an alkali metal in advance (generally called pre-doping) is adopted in these batteries and capacitors for various purposes. Various methods of pre-doping an electrode with an alkali metal are known; for example, Patent Documents 1 and 2 disclose a so-called single-wafer processing method, in which pre-doping is executed in a setting where a cut electrode plate and an alkali metal plate are separated by a separator and placed in a electrolyte solution. Meanwhile, Patent Documents 3 to 6 disclose a so-called continuous method, in which the pre-doping is executed while a belt-like electrode plate is transferred through an electrolyte solution.

Patent Document 7 discloses that peeling away and adhesion of an electrode can be reduced by cleansing a pre-doped electrode with an aprotic solvent.

### PRIOR ART DOCUMENTS

### PATENT DOCUMENTS

Patent Document 1: Japanese Unexamined Patent Application Publication No. H9-293499
Patent Document 2: Japanese Unexamined Patent Application Publication No. 2012-069894
Patent Document 3: Japanese Unexamined Patent Application Publication No. H10-308212
Patent Document 4: Japanese Unexamined Patent Application Publication No. 2008-077963
Patent Document 5: Japanese Unexamined Patent Application Publication No. 2012-049543
Patent Document 6: Japanese Unexamined Patent Application Publication No. 2012-049544
Patent Document 7: International Patent Application Publication No. 2017/146223

### SUMMARY OF THE INVENTION

### PROBLEMS TO BE SOLVED BY THE INVENTION

However, it has been found that, in a case where a large amount of electrodes are processed by a method disclosed in Patent Document 7, weight of a power storage device that includes pre-doped electrodes increases, which causes problems such as a decrease in energy density and an increase in internal resistance.

In one aspect of the present disclosure, it is preferable to provide a method of manufacturing an electrode, a method of manufacturing a power storage device, and an electrode manufacturing apparatus that are suitable for high volume production of electrodes pre-doped with an alkali metal.

### MEANS FOR SOLVING THE PROBLEMS

One aspect of the present disclosure is a method of manufacturing an electrode including an active material doped with an alkali metal. The method comprises producing a doped electrode by doping an active material included in an electrode with an alkali metal in a dope solution containing a first aprotic solvent and an alkali metal salt; cleaning the doped electrode with a cleaning solution containing a second aprotic solvent that has a boiling point lower than that of first aprotic solvent; and controlling the cleaning solution such that a content ratio of the first aprotic solvent in the cleaning solution is 6 vol% or lower.

By using the doped electrode manufactured by using the method of manufacturing an electrode which is one aspect of the present disclosure, a power storage device having high energy density and low internal resistance can be manufactured.

Another aspect of the present disclosure is an electrode manufacturing apparatus for manufacturing a strip-shaped electrode including an active material doped with an alkali metal. The electrode manufacturing apparatus comprises a doping unit configured to produce a doped electrode by doping an active material included in an electrode with an alkali metal in a dope solution containing a first aprotic solvent and an alkali metal salt, a cleaning unit configured to clean the doped electrode with a cleaning solution containing a second aprotic solvent having a boiling point lower than that of the first aprotic solvent, and a cleaning solution supply unit configured to supply the cleaning unit with the cleaning solution, content ratio of the first aprotic solvent of which is 6 vol% or lower.

By using the electrode manufactured by the electrode manufacturing apparatus which is another aspect of the present disclosure, a power storage device having high energy density and low internal resistance can be manufactured.

### BRIEF DESCRIPTION OF THE DRAWINGS

FIG. 1 is an explanatory diagram showing a configuration of an electrode manufacturing apparatus.
FIG. 2 is an explanatory diagram showing a configuration of a doping bath.
FIG. 3 is an explanatory diagram showing a configuration of a counter electrode unit.
FIG. 4 is an explanatory diagram showing a configuration of a cleaning solution supply unit.
FIG. 5 is a plan view showing a configuration of an electrode.
FIG. 6 is a sectional view taken along line VI-VI in FIG. 5.
FIG. 7 is an exploded perspective view showing a configuration of an electrode body.
FIG. 8 is an exploded perspective view showing a configuration of a power storage device.

### EXPLANATION OF REFERENCE NUMERALS

1...electrode; 1A...doped electrode; 1C...negative electrode; 11...electrode manufacturing apparatus; 15, 17, 19...doping bath; 21, 23...cleaning bath; 25, 27, 29, 31, 33, 65, 67, 69, 70, 35, 37, 39, 40, 41, 43, 45, 46, 47, 49, 51, 52, 53, 55, 57, 58, 59, 61, 64, 71, 73, 75, 77, 79, 81, 83, 85, 87, 89, 91, 93...conveyor roller; 51...counter electrode unit; 94, 303...active material layer unformed portion; 96...center portion; 101...supply roll; 103...winding roll; 105...supporting platform; 107...circulation filter unit; 109, 110, 111, 112, 113, 114...power source; 117...tab cleaner; 119...recovery unit; 121...end portion sensor; 123, 135...partition plate; 125, 127, 145, 147...supporting rod; 131...upstream bath ; 133...downstream bath; 137, 139, 141, 143...counter electrode unit; 149, 151...space; 153...conductive base material; 155...alkali metal-containing plate; 157...porous insulating member; 161...filter; 163...pump; 165...pipe; 193...current collector; 195...active material layer; 201...cleaning solution supply unit; 203...buffer tank; 205...distillation unit; 207...tank; 209, 211, 213, 215, 217, 219, 221...pipe, 223...air vent; 301...positive electrode; 305...second separator; 307...sealing plate; 309...positive electrode terminal; 311...negative electrode terminal; 313...electrode body; 315...opening; 317...case body; 319...case; 321...cell.

### MODE FOR CARRYING OUT THE INVENTION

Example embodiments of the present disclosure will be explained with reference to the drawings.

### [Embodiment 1]

### 1. Configuration of Electrode Manufacturing Apparatus 11

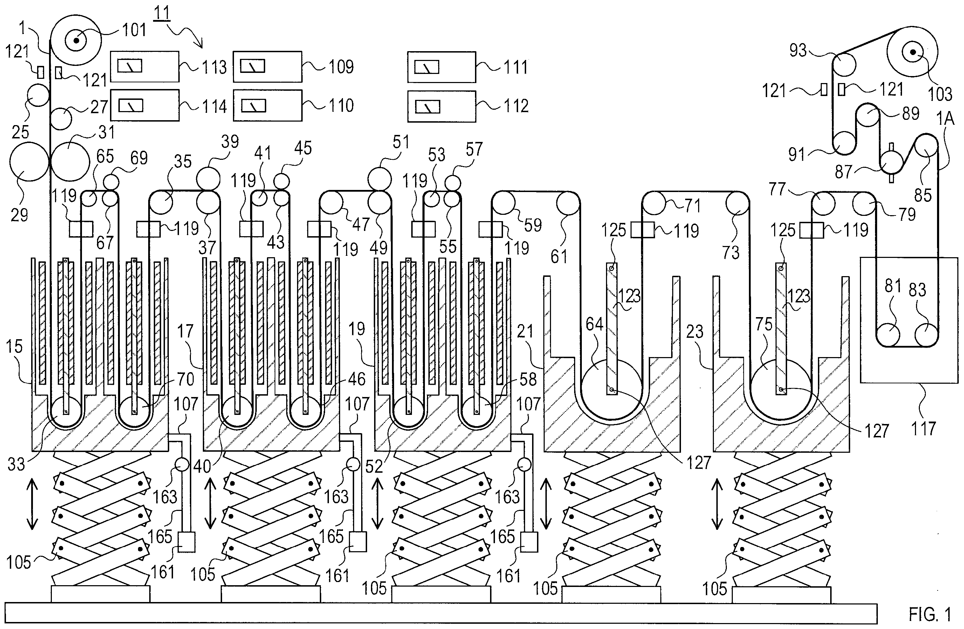

A configuration of an electrode manufacturing apparatus 11 will be explained with reference to FIG. 1 to FIG. 3. As shown in FIG. 1, the electrode manufacturing apparatus 11 comprises doping baths 15, 17, 19; cleaning baths 21, 23; conveyor rollers 25, 27, 29, 31, 33, 65, 67, 69, 70, 35, 37, 39, 40, 41, 43, 45, 46, 47, 49, 51, 52, 53, 55, 57, 58, 59, 61, 64, 71, 73, 75, 77, 79, 81, 83, 85, 87, 89, 91, 93 (hereinafter, these conveyor rollers may be collectively referred to as a group of conveyor rollers); a supply roll 101; a winding roll 103; supporting platforms 105; circulation filter units 107; six power sources 109, 110, 111, 112, 113, 114; a tab cleaner 117; recovery units 119; and end portion sensors 121. The electrode manufacturing apparatus 11 further comprises a cleaning solution supply unit 201, which will be described later, in addition to the configuration shown in FIG. 1. In FIG. 1, the cleaning solution supply unit 201 is omitted for the purpose of convenience.

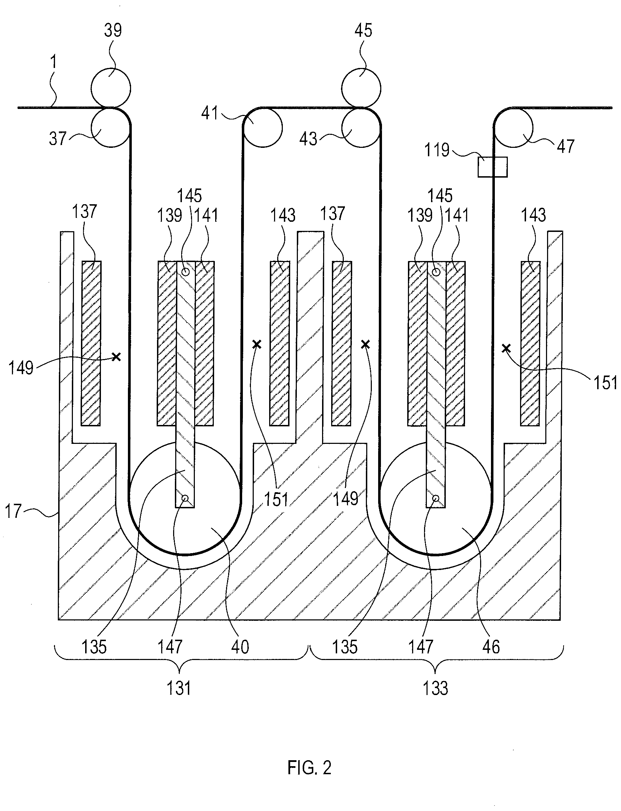

The doping baths 15, 17, 19 correspond to a doping unit. A configuration of the doping bath 17 will be explained with reference to FIG. 2. The doping bath 17 includes an upstream bath 131 and a downstream bath 133. The upstream bath 131 is situated on a side of the doping bath 17 close to the supply roll 101 (hereinafter referred to as an upstream side); the downstream bath 133 is situated on a side of the doping bath 17 close to the winding roll 103 (hereinafter referred to as a downstream side).

Firstly, a configuration of the upstream bath 131 will be explained. The upstream bath 131 is a square bath with an open top. A bottom surface of the upstream bath 131 has an approximately U-shaped cross section. The upstream bath 131 includes a partition plate 135, and four counter electrode units 137, 139, 141, 143.

The partition plate 135 is supported by a supporting rod 145 that passes through an upper end of the partition plate 135. The supporting rod 145 is fixed on a wall or the like which is not shown in the drawings. The partition plate 135 extends in vertical directions and divides an interior of the upstream bath 131 into two spaces. A conveyor roller 40 is attached to a lower end of the partition plate 135. The partition plate 135 and the conveyor roller 40 are supported by a supporting rod 147 that passes through the partition plate 135 and the conveyor roller 40. A vicinity of the lower end of the partition plate 135 is cut off so that the partition plate 135 does not contact the conveyor roller 40. A space exists between the conveyor roller 40 and the bottom surface of the upstream bath 131.

A counter electrode unit 137 is situated on the upstream side of the upstream bath 131. Counter electrode units 139, 141 are arranged to interpose the partition plate 135 from two sides. A counter electrode unit 143 is situated on the downstream side of the upstream bath 131.

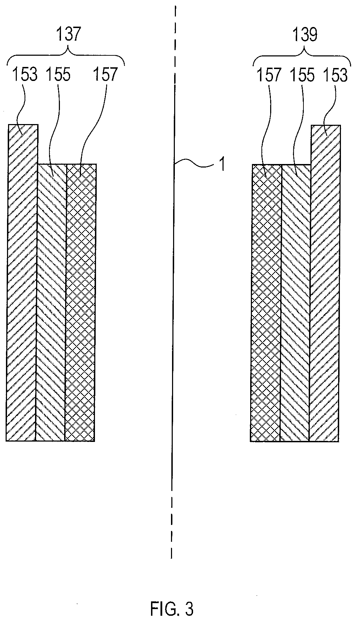

A space 149 exists between the counter electrode unit 137 and the counter electrode unit 139. A space 151 exists between the counter electrode unit 141 and the counter electrode unit 143. The counter electrode units 137, 139, 141, 143 are coupled to one electrode of a power source 109. Configurations of the counter electrode units 137, 139, 141, 143 are similar to one another. The present disclosure explains the configuration of the counter electrode units 137, 139 with reference to FIG. 3.

The counter electrode units 137, 139 include a conductive base material 153, an alkali metal-containing plate 155, and a porous insulating member 157 layered together. Materials for the conductive base material 153 may be copper, stainless steel, nickel, and the like for example. A form of the alkali metal-containing plate 155 is not particularly limited; it may be an alkali metal plate, an alkali metal alloy plate, and the like for example. A thickness of the alkali metal-containing plate 155 is 0.03 to 6 mm for example.

The porous insulating member 157 has a plate shape. The porous insulating member 157 is layered on the alkali metal-containing plate 155. The plate-shape of the porous insulating member 157 is rendered when the porous insulating member 157 is layered on the alkali metal-containing plate 155. The porous insulating member 157 may be a member that retains a certain shape by itself, or, may be an easily deformable member such as a net.

The porous insulating member 157 is a porous material; and therefore allows a dope solution, which will be explained later, to pass through the porous insulating member 157. This allows the alkali metal-containing plate 155 to contact the dope solution.

Examples of the porous insulating member 157 may include a resin mesh, for example. The resin may be, for example, polyethylene, polypropylene, nylon, polyetheretherketone, and polytetrafluoroethylene. An opening of the mesh can be appropriately determined. The opening of the mesh is, for example, from 0.1 µm to 10 mm, and preferably from 0.1 mm to 5 mm. The thickness of the mesh can be appropriately determined. The thickness of the mesh is, for example, from 1 µm to 10 mm, and preferably from 30 µm to 1 mm. An opening ratio of the mesh can be appropriately determined. The opening ratio of the mesh is, for example, from 5 to 98%, and preferably from 5 to 95%, and more preferably from 50 to 95%.

The porous insulating member 157 may be entirely made from an insulating material or may partly include an insulating layer.

The downstream bath 133 basically has a configuration similar to the upstream bath 131. However, the conveyor roller 46 is situated in the interior of the downstream bath 133 instead of the conveyor roller 40. The counter electrode units 137, 139, 141, 143 in the downstream bath 133 are coupled to one electrode of the power source 110.

The doping bath 15 has a configuration basically similar to the doping bath 17. However, the conveyor rollers 33, 70 are situated in an interior of the doping bath 15 instead of the conveyor rollers 40, 46. The counter electrode units 137, 139, 141, 143 in the upstream bath 131 of the doping bath 15 are coupled to one electrode of the power source 113. The counter electrode units 137, 139, 141, 143 in the downstream bath 133 of the doping bath 15 are coupled to one electrode of the power source 114.

The doping bath 19 has a configuration basically similar to the doping bath 17. However, the conveyor rollers 52, 58 are situated in an interior of the doping bath 19 instead of the conveyor rollers 40, 46. The counter electrode units 137, 139, 141, 143 in the upstream bath 131 of the doping bath 19 are coupled to one electrode of the power source 111. The counter electrode units 137, 139, 141, 143 in the downstream bath 133 of the doping bath 19 are coupled to one electrode of the power source 112.

The cleaning bath 21 is a square bath with an open top. A bottom surface of the cleaning bath 21 has an approximately U-shaped cross section. The cleaning bath 21 includes the partition plate 123. The partition plate 123 is supported by a supporting rod 125 that passes through an upper end of the partition plate 123. The supporting rod 125 is fixed on a wall or the like which is not shown in the drawings. The partition plate 123 extends in the vertical directions and divides an interior of the cleaning bath 21 into two spaces.

The conveyor roller 64 is attached to a lower end of the partition plate 123. The partition plate 123 and the conveyor roller 64 are supported by the supporting rod 127 that passes through the partition plate 123 and the conveyor roller 64. A vicinity of the lower end of the partition plate 123 is cut off so that the partition plate 123 does not contact the conveyor roller 64. A space exists between the conveyor roller 64 and the bottom surface of the cleaning bath 21.

The cleaning bath 23 has a configuration basically similar to the cleaning bath 21. However, the conveyor roller 75 is situated in an interior of the cleaning bath 23 instead of the conveyor roller 33. The cleaning baths 21 and 23 correspond to a cleaning unit.

Among the group of conveyor rollers, the conveyor rollers 29, 31, 67, 69, 37, 39, 43, 45, 49, 51, 55, 57 are made from an electrically conductive material. Other conveyor rollers of the group of conveyor rollers are made of elastomer except for their bearing portions. The group of conveyor rollers convey an electrode 1 along a given path. The path along which the group of conveyor rollers conveys the electrode 1 starts from the supply roll 101, travels through the doping bath 15, the doping bath 17, the doping bath 19, the cleaning bath 21, the cleaning bath 23, and the tab cleaner 117 in this order, and ends at the winding roll 103.

A part of the path that passes through the doping bath 15 is designed as follows. The path begins with a downward travel drawn by the conveyor rollers 29, 31 through the space 149 of the upstream bath 131. The direction of travel is changed upward by the conveyor roller 33 to travel through the space 151 of the upstream bath 131 upward. The direction of travel is then changed downward by the conveyor rollers 65, 67, 69 to travel through the space 149 of the downstream bath 133 downward. Then the direction of travel is changed upward by the conveyor roller 70 to travel through the space 151 of the downstream bath 133 upward. The direction of travel is ultimately changed to be horizontal by the conveyor roller 35 to travel towards the doping bath 17.

Another part of the aforementioned path that passes through the doping bath 17 is designed as follows. Firstly, the direction of travel is changed downward by the conveyor rollers 37, 39 to travel through the space 149 of the upstream bath 131 downward. The direction of travel is then changed upward by the conveyor roller 40 to travel through the space 151 of the upstream bath 131 upward. The direction of travel is then changed downward by the conveyor rollers 41, 43, 45 to travel through the space 149 of the downstream bath 133 downward. Then the direction of travel is changed upward by the conveyor roller 46 to travel through the space 151 of the downstream bath 133 upward. The direction of travel is ultimately changed to be horizontal by the conveyor roller 47 to travel towards the doping bath 19.

Another part of the aforementioned path that passes through the doping bath 19 is designed as follows. Firstly, the direction of travel is changed downward by the conveyor rollers 49, 51 to travel through the space 149 of the upstream bath 131 downward. The direction of travel is then changed upward by the conveyor roller 52 to travel through the space 151 of the upstream bath 131 upward. The direction of travel is then changed downward by the conveyor rollers 53, 55, 57 to travel through the space 149 of the downstream bath 133 downward. Then the direction of travel is changed upward by the conveyor roller 58 to travel through the space 151 of the downstream bath 133 upward. The direction of travel is ultimately changed to be horizontal by the conveyor roller 59 to travel towards the cleaning bath 21.

Another part of the aforementioned path that passes through the cleaning bath 21 begins with changing its direction of travel downward by the conveyor roller 61 to make a downward travel. The direction of travel is then changed upward by the conveyor roller 64.

Another part of the aforementioned path that passes through the cleaning bath 23 begins with changing its direction of travel downward by the conveyor roller 73 to make a downward travel. The direction of travel is then changed upward by the conveyor roller 75.

The electrode 1 is wound around the supply roll 101. In other words, the supply roll 101 holds the electrode 1 in a wound state. An active material in the electrode 1 held by the supply roll 101 is not yet doped with alkali metal.

The group of conveyor rollers draws and conveys the electrode 1 held by the supply roll 101. The winding roll 103 winds up and stores the electrode 1 conveyed by the group of conveyor rollers. The electrode 1 stored on the winding roll 103 has undergone a pre-doping process through the doping baths 15, 17, 19. The active material in the electrode 1 stored on the winding roll 103 is pre-doped with the alkali metal. The electrode 1 that includes the active material pre-doped with the alkali metal is called a doped electrode 1A.

The supporting platforms 105 support the doping baths 15, 17, 19, and the cleaning baths 21, 23 from below. The supporting platforms 105 can change their height. Each of the doping baths 15, 17, 19 has the circulation filter unit 107. The circulation filter unit 107 includes a filter 161, a pump 163, and a pipe 165.

In the circulation filter unit 107 disposed in the doping bath 17, the pipe165 is a circulation pipe that exits the doping bath 17, passes through the pump 163 and the filter 161 in this order, and returns to the doping bath 17. The dope solution in the doping bath 17 circulates through the pipe 165 and the filter 161 by a driving force of the pump 163, and returns to the doping bath 17. In this process, foreign matters in the dope solution are filtered by the filter 161. Such foreign matters include those precipitated from the dope solution and those generated from the electrode 1. A material for the filter 161 is a resin such as polypropylene and polytetrafluoroethylene. A pore size of the filter 161 can be appropriately determined. The pore size of the filter 161 is, for example, 0.2 µm or greater and 50 µm or smaller.

The circulation filter units 107 disposed in the doping baths 15, 19 have a similar configuration and exert a similar effect. In FIG. 1 and FIG. 2, the dope solution is not illustrated for the purpose of convenience.

One terminal of the power source 113 is coupled to the conveyor rollers 29, 31. Another terminal of the power source 113 is coupled to the counter electrode units 137, 139, 141, 143, disposed in the upstream bath 131 of the doping bath 15. The electrode 1 contacts the conveyor rollers 29, 31. The electrode 1 and the counter electrode units 137, 139, 141, 143 are submerged in the dope solution, which is an electrolyte solution. Accordingly, in the upstream bath 131 of the doping bath 15, the electrode 1 is electrically coupled to the counter electrode units 137, 139, 141, 143 via the electrolyte solution.

One terminal of the power source 114 is coupled to the conveyor rollers 67, 69. Another terminal of the power source 110 is coupled to the counter electrode units 137, 139, 141, 143, disposed in the downstream bath 133 of the doping bath 15. The electrode 1 contacts the conveyor rollers 67, 69. The electrode 1 and the counter electrode units 137, 139, 141, 143 are submerged in the dope solution, which is an electrolyte solution. Accordingly, in the downstream bath 133 of the doping bath 15, the electrode 1 is electrically coupled to the counter electrode units 137, 139, 141, 143 via the electrolyte solution.

One terminal of the power source 109 is coupled to the conveyor rollers 37, 39. Another terminal of the power source 109 is coupled to the counter electrode units 137, 139, 141, 143, disposed in the upstream bath 131 of the doping bath 17. The electrode 1 contacts the conveyor rollers 37, 39. The electrode 1 and the counter electrode units 137, 139, 141, 143 are submerged in the dope solution, which is an electrolyte solution. Accordingly, in the upstream bath 131 of the doping bath 17, the electrode 1 is electrically coupled to the counter electrode units 137, 139, 141, 143 via the electrolyte solution.

One terminal of the power source 110 is coupled to the conveyor rollers 43, 45. Another terminal of the power source 110 is coupled to the counter electrode units 137, 139, 141, 143, disposed in the downstream bath 133 of the doping bath 17. The electrode 1 contacts the conveyor rollers 43, 45. The electrode 1 and the counter electrode units 137, 139, 141, 143 are submerged in the dope solution, which is an electrolyte solution. Accordingly, in the downstream bath 133 of the doping bath 17, the electrode 1 is electrically coupled to the counter electrode units 137, 139, 141, 143 via the electrolyte solution.

One terminal of the power source 111 is coupled to the conveyor rollers 49, 51. Another terminal of the power source 111 is coupled to the counter electrode units 137, 139, 141, 143, disposed in the upstream bath 131 of the doping bath 19. The electrode 1 contacts the conveyor rollers 49, 51. The electrode 1 and the counter electrode units 137, 139, 141, 143 are submerged in the dope solution, which is an electrolyte solution. Accordingly, in the upstream bath 131 of the doping bath 19, the electrode 1 is electrically coupled to the counter electrode units 137, 139, 141, 143 via the electrolyte solution.

One terminal of the power source 112 is coupled to the conveyor rollers 55, 57. Another terminal of the power source 112 is coupled to the counter electrode units 137, 139, 141, 143, disposed in the downstream bath 133 of the doping bath 19. The electrode 1 contacts the conveyor rollers 55, 57. The electrode 1 and the counter electrode units 137, 139, 141, 143 are submerged in the dope solution, which is an electrolyte solution. Accordingly, in the downstream bath 133 of the doping bath 19, the electrode 1 is electrically coupled to the counter electrode units 137, 139, 141, 143 via the electrolyte solution.

The tab cleaner 117 cleans an active material layer unformed portion 94 of the electrode 1, which will be explained later. The recovery units 119 are individually disposed in each of the doping baths 15, 17, 19, and the cleaning baths 21, 23. The recovery units 119 collect the solution the electrode 1 takes out from the baths and return the collected solution back into the baths.

The end portion sensors 121 detect the position of an end portion of a width W of the electrode 1. The electrode manufacturing apparatus 11 adjusts positions of the supply roll 101 and the winding roll 103 relative to the width W of the electrode 1 based on a result of detection by the end portion sensor 121.

In the present embodiment, the electrode manufacturing apparatus 11 includes two cleaning baths 21, 23. The number of the cleaning bath may be one, or three or more. The number of the cleaning bath is preferably two or more since the total usage of cleaning solution can be reduced.

In the present embodiment, the conveying paths of the electrode 1 through the cleaning baths 21, 23 take one round trip each in the vertical directions. The conveying paths of the electrode 1 through the cleaning baths 21, 23 may take two round trips each in the vertical directions similarly to the conveying paths through the doping baths 15, 17, 19. For example, the cleaning baths 21, 23 each include an upstream bath and a downstream bath similarly to the doping baths 15, 17, 19. For example, the conveying paths of the electrode 1 through the cleaning baths 21, 23 take one round trip each through the upstream bath and the downstream bath in the vertical directions.

### 2. Cleaning Solution Supply Unit 201

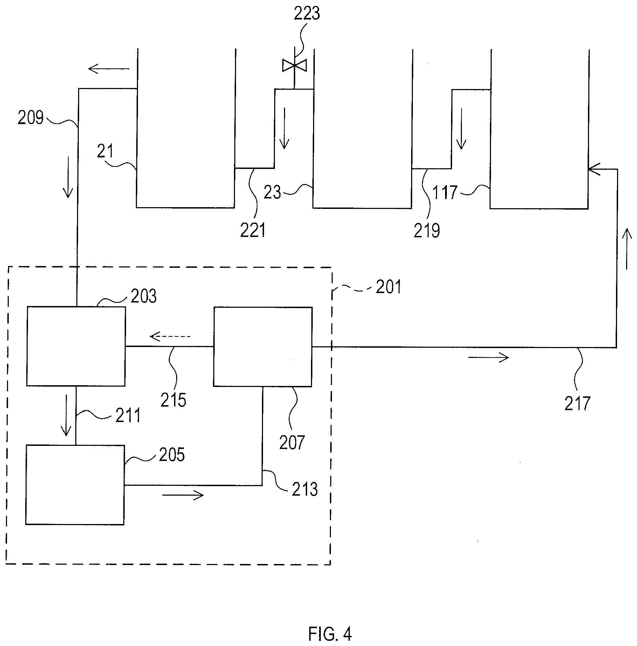

A configuration of the cleaning solution supply unit 201 is explained with reference to FIG. 4. The cleaning solution supply unit 201 comprises a buffer tank 203, a distillation unit 205, and a tank 207. An upper portion of the cleaning bath 21 and the buffer tank 203 are coupled to each other via a pipe 209.

The buffer tank 203 and the distillation unit 205 are coupled to each other via a pipe 211. The distillation unit 205 and the tank 207 are coupled to each other via a pipe 213. The buffer tank 203 and the tank 207 are coupled to each other via a pipe 215.

The distillation unit 205 performs simple distillation, for example. The tank 207 and a lower portion of the tab cleaner 117 are coupled to each other via a pipe 217. An upper portion of the tab cleaner 117 and a lower portion of the cleaning bath 23 are coupled to each other via a pipe 219. An upper portion of the cleaning bath 23 and a lower portion of the cleaning bath 21 are coupled to each other via a pipe 221. The pipe 221 includes an air vent 223.

The cleaning solution supply unit 201 does not have to comprise the distillation unit 205. When the cleaning solution supply unit 201 does not comprise the distillation unit 205, for example, an external distillation unit may be used to distill the cleaning solution.

In a case where the electrode manufacturing apparatus 11 only comprises the cleaning bath 21 and does not comprise the cleaning bath 23, the pipe 219 may be connected to a lower portion of the cleaning bath 21. In a case where the electrode manufacturing apparatus 11 comprises two or more cleaning baths, the two or more cleaning baths may be coupled in series via a pipe. The cleaning solution can travel between the serially coupled cleaning baths in order. The cleaning solution that overflows from any cleaning bath is introduced to a next cleaning bath from a lower portion of the next cleaning bath.

### 3. Configuration of Electrode 1

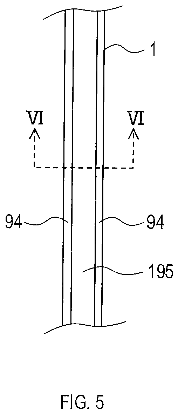

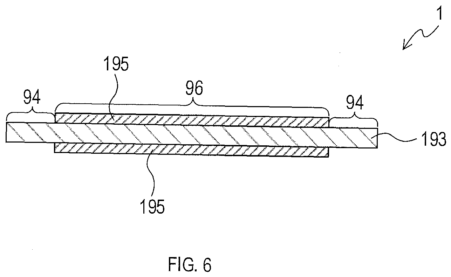

A configuration of the electrode 1 will be explained with reference to FIG. 5 and FIG. 6. As shown in FIG. 5, the electrode 1 has a strip-like shape. As shown in FIG. 6, the electrode 1 comprises a current collector 193 having a strip-like shape and active material layers 195 formed on two sides of the current collector 193.

On two ends of the electrode 1 in the width direction, active material layer unformed portions 94 are situated. An active material layer unformed portion 94 is a part of the current collector 193 where an active material layer 195 is not formed and the current collector 193 is exposed. As shown in FIG. 5, the active material layer unformed portion 94 exists continuously along a longitudinal direction of the electrode 1 and has a constant width. The active material layer unformed portion 94 exists on two opposing sides of the electrode 1. In the electrode 1, a portion where the active material layer 195 is formed is called a center portion 96. The center portion 96 is situated in a central area of the width of the electrode 1. The center portion 96 exists continuously along the longitudinal direction of the electrode 1 and has a constant width. The electrode 1 may include the active material layer unformed portion 94 only on one end of the width of the electrode 1.

If the current collector 193 is a positive electrode current collector, the current collector 193 is preferably made of aluminum, stainless steel, and the like. If the current collector 193 is a negative electrode current collector, the current collector 193 is preferably made of metal foil such as of copper, nickel, and stainless steel. The current collector 193 may be prepared by forming a conductive layer, the main component of which is a carbon material, on a metal foil. A thickness of the current collector 193 is 5 to 50 µm, for example.

The active material layer 195 can be fabricated by, for example, preparing a slurry that contains an active material before doping with the alkali metal, a binder, and the like; applying thus prepared slurry on the current collector 193; and drying the slurry.

Example of the binder may include, rubber-based binders such as styrenebutadiene rubber (SBR) and NBR; fluorine-based resin such as polytetrafluoroethylene and polyvinylidene fluoride; polypropylene; polyethylene; polyimide; fluorine modified (meth)acrylic binder as disclosed in Japanese Unexamined Patent Application Publication No. 2009-246137.

The slurry may include other components in addition to the active material and the binder. Examples of those other components may include carbon black; graphite; vapor-grown carbon fiber; conductive agent such as metal powder; carboxyl methyl cellulose; sodium salt or ammonium salt; methyl cellulose; hydroxymethyl cellulose; ethyl cellulose; hydroxypropyl cellulose; polyvinyl alcohol; oxidized starch; phosphorylated starch; and thickener such as casein.

The thickness of the active material layer 195 is not particularly limited. However, it is, for example, 5 to 500 µm, preferably 10 to 200 µm, and particularly preferably 10 to 100 µm.

The active material included in the active material layer 195 is not particularly limited as long as it is an electrode active material applicable to a battery or a capacitor that uses insertion/desorption of alkali metal ion. The active material may be a negative electrode active material or may be a positive electrode active material.

The negative-electrode active material is not particularly limited, and examples of which may include a carbon material such as graphite, easily-graphitizable carbon, hardly-graphitizable carbon, and a composite carbon material made by coating graphite particles with carbides of pitch and resin; and metal or semimetal, such as Si and Sn, that can be alloyed with lithium or a material that includes oxides of these metal or semimetal. Specific examples of the carbon material may include a carbon material disclosed in Japanese Unexamined Patent Application Publication No. 2013-258392. Specific examples of the metal or semimetal that can be alloyed with lithium or the material that includes oxides of these metal or semimetal may include materials disclosed in Japanese Unexamined Patent Application Publication No. 2005-123175 and Japanese Unexamined Patent Application Publication No. 2006-107795.

Examples of the positive-electrode active material may include transition metal oxides such as cobalt oxide, nickel oxide, manganese oxide, and vanadium oxide; and sulfur-based active materials such as elemental sulfur and metal sulfides.

Both of the positive-electrode active material and the negative-electrode active material may be made from a single substance or made by mixing two or more substances. The electrode manufacturing apparatus 11 of the present disclosure is suitable for a case in which the negative-electrode active material is doped with the alkali metal. It is particularly preferable that the negative-electrode active material includes a carbon material or Si, or oxides of the carbon material or Si.

The alkali metal for doping the active material is preferably lithium or sodium; but lithium is particularly preferable.

In a case where the electrode 1 is used to manufacture a lithium-ion rechargeable battery, a density of the active material layer 195 is preferably 1.50 to 2.00 g/cc, and particularly preferably 1.60 to 1.90 g/cc. Meanwhile, in a case where the electrode 1 is used to manufacture a lithium ion capacitor, the density of the active material layer 195 is preferably 0.50 to 1.50 g/cc, and particularly preferably 0.70 to 1.20 g/cc.

In a case where a method of manufacturing an electrode, which will be explained later, is not implemented, the active material is not doped with the alkali metal. The active material is doped with the alkali metal as a result of implementing the method of manufacturing an electrode.

### 4. Composition of Dope Solution

When using the electrode manufacturing apparatus 11, the dope solution is stored in the doping baths 15, 17, 19. The dope solution includes alkali metal salt, and a first aprotic solvent. As the first aprotic solvent, an organic solvent that has a boiling point exceeding 150°C at one atmospheric pressure is preferable; and an organic solvent that has a boiling point exceeding 200°C at one atmospheric pressure is particularly preferable.

Examples of the first aprotic solvent may include, for example, ethylene carbonate, propylene carbonate, butylene carbonate, 1-fluoroethylene carbonate, dipropyl carbonate, γ-butyrolactone, sulfolane, diethylene glycol dimethyl ether (diglyme), diethylene glycol methyl ethyl ether, triethylene glycol dimethyl ether (triglyme), triethylene glycol butyl methyl ether, and tetraethylene glycol dimethyl ether (tetraglyme).

As the first aprotic solvent, ionic liquids such as quaternary imidazolium salt, quaternary pyridinium salt, quaternary pyrrolidinium salt, and quaternary piperidinium salt may also be used. The first aprotic solvent may include a single component or may be a mixed solvent including two or more kinds of components.

In a case where the first aprotic solvent is an organic solvent that has a boiling point exceeding 150°C at one atmospheric pressure, the dope solution may include a solvent that has a boiling point of 150°C or lower at one atmospheric pressure. As the solvent having a boiling point of 150°C or lower at one atmospheric pressure, an aprotic organic solvent is preferable; such aprotic organic solvent specifically includes dimethyl carbonate, diethyl carbonate, ethyl methyl carbonate, acetonitrile, dimethoxyethane, tetrahydrofuran, dioxolane, and methylene chloride.

Among them, dimethyl carbonate and ethyl methyl carbonate are preferable, and dimethyl carbonate is particularly preferable. Content ratio of the solvent having a boiling point of 150°C or lower at one atmospheric pressure in solvents included in the dope solution is preferably 50 to 90 vol% and particularly preferably 65 to 75 vol%.

It is preferable that the alkali metal salt included in the dope solution is lithium salt or sodium salt. Examples of an anionic moiety included in the alkali metal salt may include phosphorous anion having a fluoro group such as PF₆⁻, PF₃(C₂F₅)₃⁻, and PF₃(CF₃)₃⁻; boron anion having a fluoro group or a cyano group such as BF₄⁻, BF₂(CF)₂⁻, BF₃(CF₃)⁻, and B(CN)₄⁻; sulfonyl imide anion having a fluoro group such as N(FSO₂)₂⁻, N(CF₃SO₂)₂⁻, and N(C₂F₅SO₂)₂⁻; and organic sulfonic acid anion having a fluoro group such as CF₃SO₃⁻. It is preferable that the alkali metal salt is a fluorine-containing compound.

Concentration of the alkali metal salt in the dope solution is preferably 0.1 mol/L or higher, and more preferably within a range from 0.5 to 1.5 mol/L. In a case where the concentration of the alkali metal salt in the dope solution is within this range, doping with alkali metal proceeds efficiently.

The dope solution may further include an additive such as vinylene carbonate, vinyl ethylene carbonate, 1-fluoroethylene carbonate, 1-(trifluoromethyl)ethylene carbonate, succinic anhydride, maleic anhydride, propane sultone, and diethyl sulfone.

### 5. Composition of Initial Cleaning Solution

When using the electrode manufacturing apparatus 11, a cleaning solution is stored in the cleaning baths 21, 23. The cleaning solution includes a second aprotic solvent. The second aprotic solvent is not particularly limited to any solvent as long as its boiling point is lower than that of the first aprotic solvent. As the second aprotic solvent, an organic solvent having a boiling point of 150°C or lower at one atmospheric pressure is preferable; and an organic solvent having a boiling point of 120°C or lower at one atmospheric pressure is particularly preferable.

In a case where the boiling point of the second aprotic solvent at one atmospheric pressure is 150°C or lower, it becomes easier to remove the cleaning solution from the cleaned doped electrode 1A by drying. The boiling point of the second aprotic solvent at one atmospheric pressure is preferably 30°C or higher, more preferably 40°C or higher, and particularly preferably 50°C or higher. In a case where the boiling point of the second aprotic solvent at one atmospheric pressure is 30°C or higher, it is possible to inhibit excessive vaporization of the cleaning solution in the cleaning baths 21, 23.

Examples of the second aprotic solvent may include at least one kind selected from a carbonate-based solvent, an ester-based solvent, an ether-based solvent, a hydrocarbon-based solvent, a keton-based solvent, and a nitrile-based solvent.

Examples of the carbonate-based solvent may include dimethyl carbonate, diethyl carbonate, methyl propyl carbonate, and ethyl methyl carbonate.

Examples of the ester-based solvent may include butyl acetate, amyl acetate, propylene glycol monomethyl ether acetate, ethylene glycol monoethyl ether acetate, butyl formate, and propyl formate.

Examples of the ether-based solvent may include ethyl ether, i-propyl ether, n-butyl ether, n-hexyl ether, 2-ethylhexyl ether, ethylene oxide, 1, 2-propylene oxide, dioxolane, 4-methyl dioxolane, dioxane, dimethyl dioxane, tetrahydrofuran, 2-methyl tetrahydrofuran, ethylene glycol dimethyl ether, ethylene glycol diethyl ether, propylene glycol dimethyl ether, and propylene glycol diethyl ether.

Examples of the hydrocarbon-based solvent may include n-pentane, i-pentane, n-hexane, i-hexane, n-heptane, i-heptane, 2, 2, 4-trimethyl pentane, n-octane, i-octane, cyclohexane, methyl cyclohexane, benzene, toluene, xylene, and ethylbenzene.

Examples of the keton-based solvent may include 2-hexanone and methyl isobutyl keton. Examples of the nitrile-based solvent may include acetonitrile and propionitrile.

Among those mentioned above, the carbonate-based solvent is preferable.

The second aprotic solvent may include a single component or may be a mixed solvent including two or more kinds of components.

The cleaning solution may be substantially made from the second aprotic solvent or may include an other component in addition to the second aprotic solvent. Nevertheless, the content ratio of the first aprotic solvent in the initial cleaning solution is 6 vol% or less. The initial cleaning solution means a cleaning solution that is not yet used to clean the doped electrode 1A.

### 6. Method of Manufacturing Electrode

When manufacturing the doped electrode 1A by using the electrode manufacturing apparatus 11, the following steps are taken firstly as a preparation to manufacture the doped electrode 1A. The electrode 1, the active material of which is not yet doped with the alkali metal, is wound around the supply roll 101. The dope solution is stored in the doping baths 15, 17, 19. The dope solution is what has been explained in "4. Composition of Dope Solution" mentioned above.

Then, the electrode 1 is conveyed by the group of conveyor rollers from the supply roll 101 to the winding roll 103 along the aforementioned path. The path to convey the electrode 1 passes through the doping baths 15, 17, 19. When the electrode 1 passes through the doping baths 15, 17, 19, the active material included in the active material layer 195 is doped with the alkali metal. As a consequence, the electrode 1 becomes the doped electrode 1A.

The group of conveyor rollers further conveys the doped electrode 1A to the cleaning baths 21, 23. The doped electrode 1A is cleaned in the cleaning baths 21, 23 while being conveyed by the group of conveyor rollers.

The group of conveyor rollers continuously conveys the doped electrode 1A to the tab cleaner 117. The tab cleaner 117 cleans the active material layer unformed portion 94 of the doped electrode 1A.

In the method of manufacturing an electrode in the present disclosure, the cleaning solution is controlled. By controlling the cleaning solution, the content ratio of the first aprotic solvent in the cleaning solution used to clean the doped electrode 1A becomes 6 vol% or less.

To control means to always keep the composition of the cleaning solution at a specified state by some measures in addition to initially having the composition of the cleaning solution at the specific state. In a case where there are two or more cleaning baths, to control means to always keep the composition of the cleaning solution stored in, for example, the last cleaning bath at the specific state by some measures. The last cleaning bath is a cleaning bath that cleans the doped electrode 1A lastly.

Examples of the measures to control may include a measure that includes discharging a part or all of the cleaning solution from the cleaning bath once the content ratio of the first aprotic solvent in the cleaning solution stored in the cleaning bath exceeds 6 vol% and supplying the cleaning bath with a cleaning solution, the content ratio of the first aprotic solvent of which is 6 vol% or less.

For example, the content ratio of the first aprotic solvent in the cleaning solution stored in the cleaning bath 21 is periodically or continuously measured. In the present disclosure, the content ratio of the first aprotic solvent is measured by a gas-chromatographic analysis.

Once the content ratio of the first aprotic solvent exceeds 6 vol%, the cleaning solution, the content ratio of the first aprotic solvent of which is 6 vol% or less, is supplied from the tank 207 to the tab cleaner 117.

The cleaning solution overflowed from the tab cleaner 117 passes through the pipe 219 and is supplied to a lower portion of the cleaning bath 23. The cleaning solution overflowed from the cleaning bath 23 passes through the pipe 221 and is supplied to a lower portion of the cleaning bath 21. The cleaning solution overflowed from the cleaning bath 21 passes through the pipe 209 and is transferred to the buffer tank 203.

Once a given amount of the cleaning solution is accumulated in the buffer tank 203, the cleaning solution is transferred from the buffer tank 203 to the distillation unit 205.

The distillation unit 205 removes the first aprotic solvent from the cleaning solution by distillation. As a consequence, the content ratio of the first aprotic solvent in the cleaning solution becomes 6 vol% or less. After distillation, the cleaning solution is transferred to the tank 207.

In a case where dope solution includes a fluorine compound as the alkali metal salt, the fluorine compound may reacts with moisture present in the system and generate hydrogen fluoride. Hydrogen fluoride corrodes each unit and pipe of the electrode manufacturing apparatus 11 and is toxic.

The distillation unit 205, for example, first adds a calcium compound and a zeolite to the cleaning solution and heats the cleaning solution for distillation. If a calcium compound is added, hydrogen fluoride reacts with the calcium compound and immobilized as calcium fluoride. If a zeolite is added, hydrogen fluoride reacts with the zeolite and immobilized and gasified as fluoride. As a consequence, hydrogen fluoride can be removed from the cleaning solution.

Publicly known methods of removing hydrogen fluoride by using a calcium compound and a zeolite disclosed in, for example, Japanese Unexamined Patent Application Publication No. 2013-229326 can be used. Examples of the calcium compound may include calcium carbonate, slaked lime, and quicklime. Example of the zeolite may include a molecular sieve. They may be used alone as a single substance or as a mixture of two or more substances.

A method of distillation may be, for example, flash distillation. The flash distillation is a continuous-type simple distillation. The flash distillation provides a continuous distillation while the cleaning solution continuously flows through a loop-shaped path including the buffer tank 203, the pipe 211, the distillation unit 205, the pipe 213, the tank 207, and the pipe 215.

Another measure to control the cleaning solution may be, for example, a measure that includes continuing to supply the cleaning bath with the cleaning solution, the content ratio of the first aprotic solvent of which is 6 vol% or less, while continuing to discharge used cleaning solution from the cleaning bath.

For example, the cleaning solution, the content ratio of the first aprotic solvent of which is 6 vol% or less, is continued to be supplied from the tank 207 to the tab cleaner 117. In this case, the cleaning solution overflowed from the tab cleaner 117 passes through the pipe 219 and is continued to be supplied to the lower portion of the cleaning bath 23. The cleaning solution overflowed from the cleaning bath 23 passes through the pipe 221 and is continued to be supplied to the lower portion of the cleaning bath 21. The cleaning solution overflowed from the cleaning bath 21 passes through the pipe 209 and is continued to be transferred to the buffer tank 203.

The cleaning solution, the content ratio of the first aprotic solvent of which is 6 vol% or less, supplied from the cleaning solution supply unit 201 may be an unused cleaning solution or may be a recycled cleaning solution recycled after being used in cleaning (hereinafter referred to as the recycled cleaning solution). Examples of a recycling method may include, for example, distillation. When using the recycled cleaning solution, a manufacturing cost of the doped electrode 1A can be reduced, and environmental consequences can be reduced.

By controlling the cleaning solution, the content ratio of the first aprotic solvent in the cleaning solution stored in the cleaning baths 21, 23 is preferably kept 3.5 vol% or less, more preferably kept 1.5 vol% or less, and particularly preferably kept 1 vol% or less.

When manufacturing the doped electrode 1A, the alkali metal salt is brought to the cleaning solution from the doping baths 15, 17, 19. In the method of manufacturing an electrode in the present disclosure, it is preferable to control the cleaning solution so that the content ratio of the alkali metal salt in the cleaning solution is 0.25 M or less. The content ratio of the alkali metal salt in the cleaning solution is preferably 0.20 M or less, more preferably 0.15 M or less, and particularly preferably 0.07 M or less.

As a result of reducing the content ratio of the alkali metal salt in the cleaning solution, an internal resistance of a power storage device that include the doped electrode 1A can be reduced.

An example of the measures to control the content ratio of the alkali metal salt in the cleaning solution may include a measure that includes discharging a part or all of the cleaning solution from the cleaning bath once the content ratio of the alkali metal salt in the cleaning solution stored in the cleaning bath exceeds a specified threshold and supplying the cleaning bath with a cleaning solution, the content ratio of the alkali metal salt of which is equal to or less than the threshold. In the present disclosure, the content ratio of the alkali metal salt in the cleaning solution is measured by an ion-chromatographic analysis.

Another measure to control the content ratio of the alkali metal salt in the cleaning solution may be, for example, a measure that includes continuing to supply the cleaning bath with the cleaning solution, the content ratio of the alkali metal salt of which is equal to or less than the threshold, while continuing to discharge use cleaning solution from the cleaning bath.

The doped electrode 1A manufactured by using the electrode manufacturing apparatus 11 may be a positive electrode or may be a negative electrode. The electrode manufacturing apparatus 11 dopes the positive electrode active material with the alkali metal when manufacturing the positive electrode. The electrode manufacturing apparatus 11 dopes the negative electrode active material with the alkali metal when manufacturing the negative electrode.

The electrode manufacturing apparatus 11 is suitable to manufacture the negative electrode that is used in alkali-ion capacitors or batteries, more suitable to manufacture the negative electrode that is used in alkali-ion capacitors or rechargeable batteries, and particularly suitable to manufacture the negative electrode that is used in lithium-ion capacitors or lithium-ion rechargeable batteries.

In a case where lithium is occluded in the negative electrode active material of a lithium ion capacitor, a doping amount of the alkali metal is preferably 70 to 95% relative to a theoretical capacity of the negative electrode active material. In a case where lithium is occluded in the negative electrode active material of a lithium-ion rechargeable battery, the doping amount of the alkali metal is preferably 10 to 30% relative to the theoretical capacity of the negative electrode active material.

### 7. Method of Manufacturing Power Storage Device

A method of manufacturing a power storage device in the present disclosure is a method of manufacturing a power storage device comprising a positive electrode, a negative electrode, and an electrolyte. In the method of manufacturing a power storage device in the present disclosure, the negative electrode is manufactured by using the aforementioned "6. Method of Manufacturing Electrode".

Examples of the power storage device may include a capacitor and a battery. The capacitor is not particularly limited as long as it is a capacitor that uses insertion/desorption of the alkali metal ion. Examples of such capacitor may include a lithium ion capacitor and a sodium ion capacitor. Among these examples, the lithium ion capacitor is preferable.

The basic configuration of the positive electrode included in the capacitor may be a typical configuration. It is preferable to use activated carbon as the positive electrode active material.

A form of electrolyte included in the capacitor is usually a liquid electrolyte solution. The basic configuration of the electrolyte solution is the same as that of the aforementioned dope solution. A concentration of the alkali metal ion in the electrolyte is preferably 0.1 mol/L or more, and more preferably within a range of 0.5 to 1.5 mol/L. The electrolyte may be in a gel form or a solid form for a purpose of inhibiting leakage.

The capacitor may include a separator between the positive electrode and the negative electrode to reduce physical contact between the positive electrode and the negative electrode. Examples of the separator may include a nonwoven cloth or a porous film made from a material such as cellulose rayon, polyethylene, polypropylene, polyamide, polyester, and polyimide.

Examples of a structure of the capacitor may include a laminated cell having a laminate formed from three or more of a plate-like component unit; the plate-like component unit includes the positive electrode, the negative electrode, and the interposed separator; and the laminate is enclosed in an external film.

Examples of the structure of the capacitor may also include a wound cell having a laminate formed by winding a belt-like component unit, which includes the positive electrode, the negative electrode, and the interposing separator, and having thus formed laminate stored in a square or cylindrical container.

The capacitor can be manufactured by, for example, forming a basic structure including at least the negative electrode and the positive electrode, and introducing the electrolyte in the basic structure.

For the lithium ion capacitor, a density of the active material layer 195 is preferably 0.50 to 1.50 g/cc, and particularly preferably 0.70 to 1.20 g/cc.

The battery is not particularly limited as long as it is a battery that uses insertion/desorption of the alkali metal ion. The battery may be a non-rechargeable battery or a rechargeable battery. Examples of the battery may include a lithium-ion rechargeable battery, a sodium ion rechargeable battery, and an air battery. Among these examples, the lithium-ion rechargeable battery is preferable.

The basic configuration of the positive electrode included in the battery may be a typical configuration. In addition to these examples already introduced, an organic active material such as a nitroxy radical compound, and oxygen may also be used as the positive-electrode active material.

A configuration of the electrolyte included in the battery and a configuration of the battery itself are the same as those of the capacitor. The battery can be manufactured by, for example, forming a basic structure including at least the negative electrode and the positive electrode, and introducing the electrolyte in the basic structure

### <Examples>

### 1. Manufacture of Negative Electrode Used in Each Example and

### Comparative Example

A long strip-shaped current collector 193 was prepared. The current collector 193 was used as the negative electrode current collector. The size of the current collector 193 was 132 mm in width and 8 µm in thickness. The surface roughness Ra of the current collector 193 was 0.1 µm. The current collector 193 was made from copper foil. The active material layer 195 was formed on two sides of the current collector 193. The active material layer 195 was the negative electrode active material layer. The thickness of the active material layer 195 was 65 µm. For the lithium battery, the density of the active material layer 195 is preferably 1.30 to 2.00 g/cc, and particularly preferably 1.40 to 1.90 g/cc.

The amount of application of the active material layer 195 on one side of the current collector 193 was 50 g/m². The active material layer 195 was formed along a longitudinal direction of the current collector 193. The active material layer 195 was formed from an end portion of the width W of the current collector 193 for 120 mm in width. The width of the active material layer unformed portion 94 along the other end portion of the width W of the current collector 193 was 12 mm. Then, after drying and pressing, the electrode 1 was obtained.

The active material layer 195 contained the negative electrode active material, carboxymethyl cellulose, acetylene black, and the binder with a mass ratio of 88:4:5:3. The negative electrode active material was a graphite-based active material. The binder was a fluorine acrylic resin. D50 of the graphite-based active material was 5 µm. A BET specific surface area of the graphite-based active material was 10 m²/g.

The electrode manufacturing apparatus 11 shown in FIG. 1 was prepared, and the electrode 1 was placed. The counter electrode units 137, 139, 141, 143 were placed in each of the doping baths 15, 17, 19. Then, the dope solution was supplied into the doping baths 15, 17, 19. The dope solution was a solution that include 1.2M of LiPF6. LiPF6 is a fluorine containing compound. The solvent of the dope solution was a mixed solution of EC (ethylene carbonate) and DMC (dimethyl carbonate) with a volume ratio of 3:7. The EC corresponds to the first aprotic solvent.

Then, the electrode 1 and the counter electrode units 137, 139, 141, 143 placed in the electrode manufacturing apparatus 11 were coupled to a direct current power source equipped with an electric current/voltage monitor, and 50 A of electric current was supplied while the electrode 1 was conveyed at a speed of 2 m/min. At this time, the center of the width W of the active material layer 195 included in the electrode 1 matched the center of the width of the lithium metal plate included in the counter electrode unit 51. By this step, the negative electrode active material in the active material layer 195 was doped with lithium about 80% relative to the theoretical capacity. The electrode 1 accordingly became the doped electrode 1A.

After having the doped electrode 1A pass through the cleaning baths 21, 23, spraying argon onto the doped electrode 1A, and drying the argon, the doped electrode 1A was wound up. 25°C of DMC was stored in the cleaning baths 21, 23. DMC corresponds to the second aprotic solvent. DMC initially stored in the cleaning baths 21, 23 did not contain EC. The doped electrode 1A was thus manufactured as mentioned above.

### 2. Manufacture of Positive Electrode Used in Each Example and Comparative Example

A strip-shaped positive electrode current collector made of aluminum foil was prepared. The size of the positive electrode current collector was 128 mm in width and 12 µm in thickness. An aperture ratio of the positive electrode current collector was 0%. A conductive layer was formed on two sides of the positive electrode current collector. A positive electrode active material layer was formed on each conductive layer. The thickness of the positive electrode active material layer was 144 µm.

The positive electrode active material layer was formed along a length of the positive electrode current collector. The positive electrode active material layer was formed from an end portion of the width of the positive electrode current collector for 111 mm in width. The width of a positive electrode active material layer unformed portion along the other end portion of the width of the positive electrode current collector was 17 mm. The positive electrode active material layer unformed portion is a portion where the positive electrode active material layer is not formed.

Then, after drying and pressing, a positive electrode was obtained. The positive electrode active material layer contained activated carbon, acetylene black, the binder, and carboxymethyl cellulose with a mass ratio of 88:5:3:3. D50 of the activated carbon was 3.5 µm. The BET specific surface area of the activated carbon was 1950 m²/g. The binder was a fluoirne acrylic resin.

### 3. Manufacture of Separator Used in Each Example and Comparative Example

A first separator and a second separator were made by cutting them out from a PP (polypropylene) sheet having a thickness of 15 µm and a surface roughness of 0.1 µm. The sizes of the width W and the length L of the first separator and of the second separator were greater than those of the positive electrode and the negative electrode.

### 4. Manufacture of Lithium Ion Capacitor

### (4-1) Example 1

The first separator, the negative electrode, the second separator, and the positive electrode thus manufactured were layered in this order to manufacture an electrode body. The negative electrode used here was a portion of the doped electrode 1A, taken from between 200 m from the front end and 205 m from the front end. The front end is a leading end portion in the direction of conveyance.

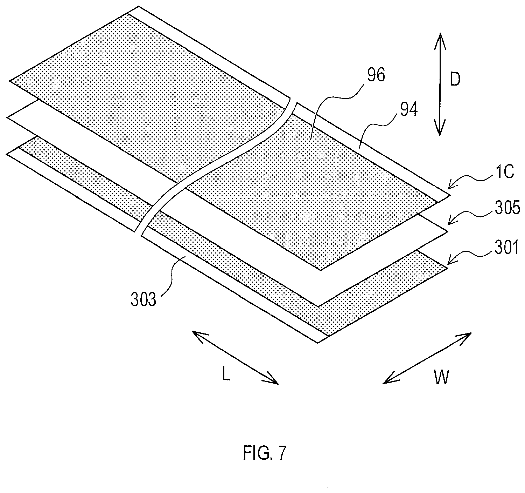

As shown in FIG. 7, the positional relationship between an active material layer unformed portion 94 of a negative electrode 1C and an active material layer unformed portion 303 of a positive electrode 301 is opposite to each other along the width W. When viewing from thickness D of the electrode body, at least a portion of the active material layer unformed portion 94 protruded in a direction of the width W without overlapping the second separator 305. When viewing from the thickness D of the electrode body, at least a portion of the active material layer unformed portion 303 protruded in the direction of the width W without overlapping the second separator 305.

Then, the electrode body was wound around an outer circumferential surface of a core rod made of stainless steel, such that the second separator 305 was situated on an inner side, to manufacture a cylindrical wound body. Then, the cylindrical wound body was pressed to manufacture the electrode body having a flattened wound structure.

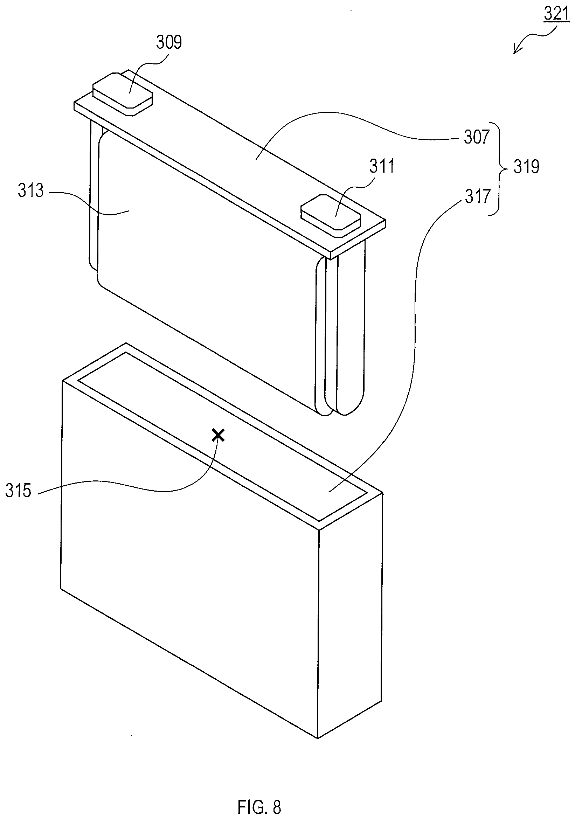

Then, an aluminum lead member was coupled to the active material layer unformed portion 303 by ultrasonic welding. A copper lead member was coupled to the active material layer unformed portion 94 by ultrasonic welding. Then, as shown in FIG. 8, an aluminum sealing plate 307 was prepared. The sealing plate 307 included a positive electrode terminal 309 and a negative electrode terminal 311. The sealing plate 307 also included an unillustrated inlet. The positive electrode terminal 309 and the negative electrode terminal 311 were integrated with the sealing plate 307 via a PP resin holder by insert resin molding.

Then, the other end of the aforementioned lead member coupled to the active material layer unformed portion 94 was electrically coupled to the negative electrode terminal 311 by resistance welding. The other end of the lead member coupled to the active material layer unformed portion 303 was also electrically coupled to the positive electrode terminal 309 by resistance welding. As a consequence, an electrode body 313 was coupled to the sealing plate 307.

Then, as shown in FIG. 8, a square-shaped aluminum case body 317 having an opening 315 on one side was prepared. Then, the electrode body 313 coupled to the sealing plate 307 was inserted into the case body 317 from the opening 315.

In this state, an outer circumferential edge portion of the opening 315 and an outer circumferential edge portion of the sealing plate 307 were swaged to close the opening 315. Then, an electrolyte solution was injected into a case 319 from the inlet formed on the sealing plate 307. The case 319 was formed of the sealing plate 307 and the case body 317.

The electrolyte solution was made by preparing a solvent containing a mixture of ethylene carbonate, ethyl methyl carbonate, and dimethyl carbonate with a volume ratio of 3:4:3 and dissolving LiPF6 in the solvent at a concentration of 1.2 M. After tentatively closing the inlet with a rubber plug, aging was performed. The aging was performed by charging and discharging at a constant temperature of 80°C. After the aging, the inlet was sealed with a safety valve and thus a lithium ion capacitor cell 321 was obtained.

### (4-2) Examples 2 to 4 and Comparative Example 1

Cells for Examples 2 to 4 and Comparative Example 1 were manufactured basically by the same procedures as for the cell in Example 1. However, the negative electrode of Example 2 was a portion of the doped electrode 1A taken from between 1500 m and 1505 m from the front end.

In Example 3, the negative electrode was a portion of the doped electrode 1A taken from between 2500 m and 2505 m from the front end. In Example 4, the negative electrode was a portion of the doped electrode 1A taken from between 3500 m and 3505 m from the front end. In Comparative Example 1, the negative electrode was a portion of the doped electrode 1A taken from between 5000 m and 5005 m from the front end.

### 5. Measurement of Cell Weight

For each of the Examples and Comparative Example 1, weight of the manufactured cell was measured by using electronic balance. The results of the measurement are shown in a column for "cell weight" in Table 1. The "cell weight" shown in Table 1 is a relative value when the weight of the cell manufactured in Example 1 is 100. The "conveyance distance of electrode" shown in Table 1 means a distance from a portion of the doped electrode 1A used as the negative electrode to the front end of the doped electrode 1A.

**[Table 1]**

| | Conveyance Distance of Electrode [m] | Cleaning Bath 21 | | | Cleaning Bath 23 | | | Cell Weight | Initial DC-IR [mΩ] |
|---|---|---|---|---|---|---|---|---|---|
| | | Solvent Composition Ratio | | LiPF₆ Concentration [M] | Solvent Composition Ratio | | LiPF₆ Concentration [M] | | |
| | | EC [voL %] | DMC [vol.%] | | EC [vol.%] | DMC [vol.%] | | | |
| Example 1 | 200 | 0.9 | 99.1 | 0.05 | 0 | 100 | [M] 0.01 | 100 | 0.97 |
| Example 2 | 1500 | 4.5 | 95.5 | 0.2 | 0.4 | 99.6 | 0.06 | 100.2 | 0.97 |
| Example 3 | 2500 | 7 | 93 | 0.3 | 0.8 | 99.2 | 0.09 | 100.4 | 0.98 |
| Example 4 | 3500 | 9 | 91 | 0.35 | 3 | 97 | 0.15 | 100.8 | 0.99 |
| Comparative Example 1 | 5000 | 14.5 | 85.5 | 0.54 | 6.9 | 93.1 | 0.27 | 101.3 | 1.03 |

### 6. Measurement of DC-IR (Direct Current Internal Resistance)

For each of the Examples and comparative Example 1, the manufactured cell was charged at a constant current of 10 A untel the cell voltage reachec 3.8 V. Then, the constant-voltage charging, which applies a constant voltage of 3.8 V to the cell, was conducted for 30 minutes. Then, the cell was discharged at a constant current of 100 A until the cell voltage reached 2.2 V. A value was calculated by divinding the voltage difference between the voltage immediately before the initiation of the discharge and the voltage 0.1 second after the initiation of the discharge curent. Thus calculated value was an initial DC-IR. The initial DC-IR is a direct current internal resistance of an evaluation cell. The result of evaluation is shown in Table 1.

### 7. Composition Analysis of Cleaning Solution

When the portion of the doped electrode 1A, used as the negative electrode in Example 1, passed the cleaning baths 21, 23, the cleaning solution was recovered from the cleaning baths 21, 23. Thus recovered cleaning solution was the cleaning solution of Example 1. The cleaning solution was recovered likewise in Examples 2 to 4 and Comparative Example 1.

For each of the Examples and Comparative Example 1, a content ratio of EC in the recovered cleaning solution was measured by using gas-chromatographic analysis.

The method of the gas-chromatographic analysis was as described below. The measurement was conducted after the cleaning solution recovered from the cleaning baths 21, 23 was diluted by 100 times with acetone. A calibration curve was prepared in advance by measuring a mixed solvent at a known concentration. Content ratios of EC and DMC were obtained by applying the result of measurement to the calibration curve. Conditions for the measurement were as described below. The result of the measurement is shown in Table 1.
Device: Agilent 7890B
Column: VF-5ms, length 30 m×inner diameter 0.25 mm×thickness 1 µm
Inlet temperature: 250°C
Split ratio: 20:1
Sample injection quantity: 1 µL
Column temperature: 40°C×3 minutes → temperature elevation rate: 20°C/min → 280°C×1 minute
Carrier gas: He
Linear velocity: 46 cm/sec

For each of the Examples and Comparative Example 1, the content ratio of LiPF₆ in the recovered cleaning solution was measured by cation analysis by the ion-chromatographic analysis.

The method of the ion-chromatographic analysis was as described below. The measurement was conducted after the cleaning solution recovered from the cleaning baths 21, 23 was diluted by 1000 times with ultrapure water. A calibration curve was prepared in advance by measuring a mixed solvent at a known concentration. Li⁺ concentration was obtained by applying the result of measurement to the calibration curve. Content ratio of LiPF₆ was obtained based on the Li⁺ concentration. Conditions for the measurement were as described below. The result of the measurement is shown in Table 1.
Device Name: Thermo Fisher Integrion Oven/TCD
Guard column: Dionex IonPac CG12A-8 µm (2×50 mm)
Separation column: Dionex IonPac CS12A-8 µm (2×250 mm)
Column temperature: 35°C
Eluent: meth sulfonic acid aqueous solution
Concentration: 18 mmol (isocratic)
Flow amount: 0.25 mL/min
Duration of measurement: 20 minutes
Detector: electric conductivity detector
Suppressor: CDRS 2 mm Constant voltage mode 4V
Sample injection quantity: 10 µL

### 8. Distillation and Regeneration of Cleaning Solution

The cleaning solution was recovered from the cleaning bath 23 when a portion of the electrode 1, 5000 m from the front end, passed the cleaning bath 23. The recovered cleaning solution underwent a vacuum distillation under the following conditions.
Heating temperature: 80°C
Vacuum degree: -0.9 barge
Cooling temperature: 25°C

When conducting the vacuum distillation, quicklime or molecular sieve 3A was added to the cleaning solution. The quicklime and the molecular sieve 3A are dehydrofluorination agents. The content ratio of the quicklime and the molecular sieve 3A relative to the cleaning solution was 10 mass%.

Composition and pH of the cleaning solution before and after the vacuum distillation were measured. The composition was measured by the methods using the gas-chromatographic analysis and ion-chromatographic analysis. To measure pH, a pH test paper was used. The result of the measurement is shown in Table 2.

**[Table 2]**

| De-HF Agent | Before Distillation | | | | After Distillation | | | |
|---|---|---|---|---|---|---|---|---|
| | pH | Solvent Composition Ratio | | LiPF₆ Concentration [M] | pH | Solvent Composition Ratio | | LiPF₆ Concentration [M] |
| | | EC [vol%] | DMC [voL%] | | | EC [vol%] | DMC [vol%] | |
| None | 6 | 0.9 | 99.1 | 0.05 | 4 | ND | 100 | ND |
| Quicklime | 6 | 0.9 | 99.1 | 0.05 | 7 | ND | 100 | ND |
| Molecular sieve | 6 | 0.9 | 99.1 | 0.05 | 7 | ND | 100 | ND |

The recovered cleaning solution also underwent a vacuum distillation under a condition that a dehydrofluorination agent was not added. Composition and pH of the cleaning solution before and after the vacuum distillation were also measured in this case. The result of the measurement is shown in Table 2.

In Table 2, de-HF agent means the dehydrofluorination agent. In Table 2, ND means Not Detected. In a case where the vacuum distillation was conducted by using the quicklime or the molecular sieve 3A, pH of the cleaning solution did not drop. The reason that the pH of the cleaning solution did not drop was because generation of hydrogen fluoride was inhibited.

### <Other Embodiments>

Although the embodiments of the present disclosure have been explained hereinbefore, implementation of the present disclosure should not be limited to the aforementioned embodiments and may be modified in various modes.
(1) The first aprotic solvent may be removed from the cleaning solution by using a method other than distillation.
(2) Functions of one element in each of the aforementioned embodiments may be performed by two or more elements. Functions of two or more elements may be performed by one element. A part of configurations of each of the aforementioned embodiments may be omitted. At least a part of the configurations of each of the aforementioned embodiments may be added to or replaced with a different configuration of the aforementioned embodiments.
(3) Aside from the aforementioned electrode manufacturing apparatus, the present disclosure can also be implemented in various forms such as, a system including the apparatus, a program to operate a computer as a controller of the electrode manufacturing apparatus, a non-transitory tangible storage medium such as a semiconductor memory storing this program, and a doping method.

## Claims

1. A method of manufacturing an electrode including an active material doped with an alkali metal, the method comprising:
producing a doped electrode by doping an active material included in an electrode with an alkali metal in a dope solution containing a first aprotic solvent and an alkali metal salt,
cleaning the doped electrode with a cleaning solution containing a second aprotic solvent that has a boiling point lower than that of the first aprotic solvent, and
controlling the cleaning solution such that a content ratio of the first aprotic solvent in the cleaning solution is 6 vol% or lower.

2. The method of manufacturing an electrode according to claim 1,
wherein the first aprotic solvent is an organic solvent having a boiling point exceeding 150°C at one atmospheric pressure, and
wherein the second aprotic solvent is an organic solvent having a boiling point of 150°C or lower at one atmospheric pressure.

3. The method of manufacturing an electrode according to claim 1 or 2, wherein the cleaning solution is controlled such that a content of the alkali metal salt is 0.25 M or less in the cleaning solution used for cleaning the doped electrode.

4. The method of manufacturing an electrode according to any one of claims 1 to 3,
wherein the alkali metal salt is a fluorine-containing compound.

5. The method of manufacturing an electrode according to any one of claims 1 to 4,
wherein the electrode has a strip-like shape.

6. The method of manufacturing an electrode according to any one of claims 1 to 5,
wherein the cleaning solution used to clean the doped electrode is distilled and reused to clean the doped electrode.

7. The method of manufacturing an electrode according to claim 6,
wherein the cleaning solution used to clean the doped electrode is distilled with one or more selected from a group consisting of a calcium compound and a zeolite, and reused to clean the doped electrode.

8. A method of manufacturing a power storage device including a positive electrode, a negative electrode, and an electrolyte, the method comprising:
producing the negative electrode by using the method of manufacturing electrode according to any one of claims 1 to 7.

9. An electrode manufacturing apparatus for manufacturing a strip-shaped electrode containing an active material doped with an alkali metal, the apparatus comprising:
a doping unit configured to produce a doped electrode by doping an active material included in an electrode with an alkali metal in a dope solution containing a first aprotic solvent and an alkali metal salt,
a cleaning unit configured to clean the doped electrode with a cleaning solution containing a second aprotic solvent having a boiling point lower than that of the first aprotic solvent, and
a cleaning solution supply unit configured to supply the cleaning unit with the cleaning solution, content ratio of the first aprotic solvent of which is 6 vol% or lower.

10. The electrode manufacturing apparatus according to claim 9,
wherein the cleaning solution supply unit comprises a distillation unit configured to distill the cleaning solution used in the cleaning unit to clean the doped electrode, and
wherein the cleaning solution supply unit is configured to supply the cleaning unit with the cleaning solution distilled in the distillation unit.

11. The electrode manufacturing apparatus according to claim 10,
wherein the distillation unit is configured to distill the cleaning solution by using one or more selected from a group consisting of a calcium compound and a zeolite.
